# EUROPÄISCHE PATENTSCHRIFT

(11) **EP 1 572 313 B1**
(45) Veröffentlichungstag und Bekanntmachung des Hinweises auf die Patenterteilung: **17.09.2008**
(21) Anmeldenummer: 03813561.2
(22) Anmeldetag: 06.12.2003
(51) Int. Cl.: B01D 3/10, B01D 3/42, B01D 1/00, C02F 1/04, C02F 1/14, B01D 5/00, B01D 1/26

(54) **VERFAHREN UND VORRICHTUNG ZUR ERZEUGUNG EINER REINFLÜSSIGKEIT AUS EINER ROHFLÜSSIGKEIT**
METHOD AND DEVICE FOR PRODUCING A PURE LIQUID FROM A CRUDE LIQUID
PROCEDE ET DISPOSITIF POUR PRODUIRE UN LIQUIDE PUR A PARTIR D'UN LIQUIDE BRUT

(30) Priorität: 21.12.2002 DE 10260494
(43) Veröffentlichungstag der Anmeldung: 14.09.2005
(73) Patentinhaber: KBH Engineering GmbH, 86343 Königsbrunn (DE)
(72) Erfinder: HAUSMANN, Kurt, 86343 Königsbrunn (DE)
(74) Vertreter: Munk, Ludwig
(86) Internationale Anmeldenummer: PCT/EP2003/013824
(87) Internationale Veröffentlichungsnummer: WO 2004/056442

(56) Entgegenhaltungen:
- DE-A- 3 830 647
- FR-A- 2 493 171
- LU-A- 45 940
- US-A- 5 242 548
- US-A- 5 248 394

## Beschreibung

Die Erfindung betrifft ein Verfahren zur Erzeugung einer Reinflüssigkeit aus einer Rohflüssigkeit, insbesondere zur Erzeugung von Süßwasser aus Salzwasser, durch in einer Verdampfungseinrichtung unter Unterdruck stattfindende Verdampfung der Rohflüssigkeit und Kondensation des Dampfes in einer mit dem Dampfausgang der Verdampfungseinrichtung verbundenen Kondensationseinrichtung.

Die Erfindung betrifft ferner eine zur Durchführung des Verfahrens geeignete Vorrichtung mit wenigstens einer Verdampfungseinrichtung, die mit Rohflüssigkeit versorgbar ist und in der ein Unterdruck erzeugbar ist, und mit wenigstens einer Kondensationseinrichtung, die über eine Verbindungsleitung mit Dampf aus wenigstens einer vorgeordneten Verdampfungseinrichtung beaufschlagbar ist.

Ein Verfahren und eine Vorrichtung dieser Art sind aus der DE 33 45 937 Al bekannt. Hierbei ist die Verbindungsleitung zwischen Verdampfungseinrichtung und Kondensationseinrichtung nicht absperrbar. Zur Erzeugung des gewünschten Unterdrucks ist die

Verdampfungseinrichtung mit wenigstens einem mit Rohflüssigkeit gefüllten, zumindest um die Höhe der durch den Umgebungsluftdruck erzeugbaren Wassersäule oberhalb eines Wasserspiegels angeordneten Behälter verbunden, der mit einer in den Wasserspiegel eintauchenden, absperrbaren Fallleitung versehen ist. Durch Öffnen der Fallleitung strömt Flüssigkeit ab, wodurch bei verhinderter Belüftung der Verdampfungseinrichtung in dieser ein Unterdruck erzeugt wird, der hier über die nicht geschlossene Verbindungsleitung in die Kondensationseinrichtung durchschlägt. Infolge der benötigten Hochlage des Behälters und des Eintauchens des unteren Endes der Fallleitung in einen vorhandenen Wasserspiegel ergeben sich eine vergleichsweise große Bauhöhe und ein vergleichsweise hoher Bauaufwand. Dennoch ist der erzielbare Unterdruck infolge der vorhandenen Verbindung zwischen Verdampfungseinrichtung und Kondensationseinrichtung vergleichsweise gering. Hinzu kommt, dass sich in der Flüssigkeit, in die die Fallleitung eintaucht, durch Ausgasung etc. entstandene Gasbläschen befinde können, die sich am unteren Ende der Fallleitung sammeln und in dieser hochsteigen können, was zu einer weiteren Beeinträchtigung des erzielbaren Unterdrucks führen kann.

Das Dokument FR-A-2493171 beschreibt ein Verfahren zur Vakuumdestillation, bei dem der Verdampfer über den Kondensator mit einer gemeinsamen Vakuumquelle in Verbindung gebracht wird.

Hiervon ausgehend ist es daher die Aufgabe der vorliegenden Erfindung, ein Verfahren und eine Vorrichtung eingangs erwähnter Art zu schaffen, womit eine hohe Verdampfungsleistung bei niedrigem Siedepunkt und damit eine hohe Wirtschaftlichkeit gewährleistet werden.

Diese Aufgabe wird in Verbindung mit dem gattungsgemäßen Verfahren durch das Kennzeichen des Anspruchs 1 und in Verbindung mit der gattungsgemäßen Vorrichtung durch das Kennzeichen des Anspruchs 8 gelöst.

Die erfindungsgemäßen Maßnahmen ergeben in vorteilhafter Weise einen hohen Evakuierungsgrad und damit eine hohe Verdampfungsleistung bei vergleichsweise geringen Temperaturen, wie sie in vorteilhafter Weise mit einfachen Solarkollektoren oder dergleichen erreicht werden können. In vorteilhafter Weise lassen sich die erfindungsgemäßen Maßnahmen auch im Rahmen einer sehr kompakten und dementsprechend wartungsfreundlichen Anordnung realisieren. Mit den erfindungsgemäßen Maßnahmen wird daher die oben genannte Aufgabe auf höchst einfache und kostengünstige Weise gelöst.

Vorteilhafte Ausgestaltungen und zweckmäßige Fortbildungen der übergeordneten Maßnahmen sind in den Unteransprüchen angegeben. So kann die Verdampfungseinrichtung zweckmäßig aus einem Erhitzer und einem diesem nachgeordneten Separator bestehen. Dies ermöglicht eine direkte oder indirekte Erwärmung des zu verdampfenden Rohwassers außerhalb des Separators und ergibt daher eine hohe konstruktive Freizügigkeit.

Eine weitere vorteilhafte. Maßnahme zur Leistungssteigerung kann darin bestehen, dass die Kondensationseinrichtung während des Kondensationsbetriebs gekühlt wird. Die in diesem Zusammenhang anfallende Wärme kann in vorteilhafter Weise zur Vorwärmung des zu verdampfenden Rohwassers verwendet werden.

Eine weitere, besonders zu bevorzugende Maßnahme kann darin bestehen, dass die Kondensationseinrichtung während des Kondensationsbetriebs zu Rüttelbewegungen angeregt wird. Hierdurch wird verhindert, dass sich auf der Kondensatseite der Kondensationseinrichtung Wassertropfen bilden, die den Wärmedurchgang und damit die Kondensation beeinträchtigen können. Vielmehr wird durch die Rüttelbewegungen erreicht, dass die Tropfen schnell ablaufen und kondensatseitig nur eine sehr dünne Wasserschicht vorhanden ist.

Eine weitere vorteilhafte Maßnahme kann darin bestehen, dass der von der Verdampfungseinrichtung kommende Dampf mittels einer Injektionseinrichtung in die Kondensationseinrichtung hineingepumpt wird. Dies ermöglicht in vorteilhafter Weise eine Druckerhöhung innerhalb der Kondensationseinrichtung, was sich ebenfalls günstig auf die Beschleunigung des Kondensationsvorgangs auswirkt.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Fig. 1: ein Funktionsschema einer Meerwasserentsalzungsanlage mit einer Verdampfungseinrichtung und einer Kondensationseinrichtung,
- Fig. 2: ein Funktionsschema einer Meerwasserentsalzungsanlage mit mehreren Verdampfungs- und Kondensationseinrichtungen,
- Fig. 3: einen Schnitt durch eine einer Kondensationseinrichtung zugeordnete Injektionseinrichtung und
- Fig. 4: eine Seitenansicht eines rüttelbaren Kondensators.

Hauptanwendungsgebiet der Erfindung ist die Entsalzung von Meerwasser, also die Erzeugung von Süßwasser aus Salzwasser. Die erfindungsgemäße Anlage ist daher zweckmäßig am Ufer eines Meeres installiert, aus dem das benötigte Salzwasser in praktisch unbegrenzte Menge entnommen werden kann.

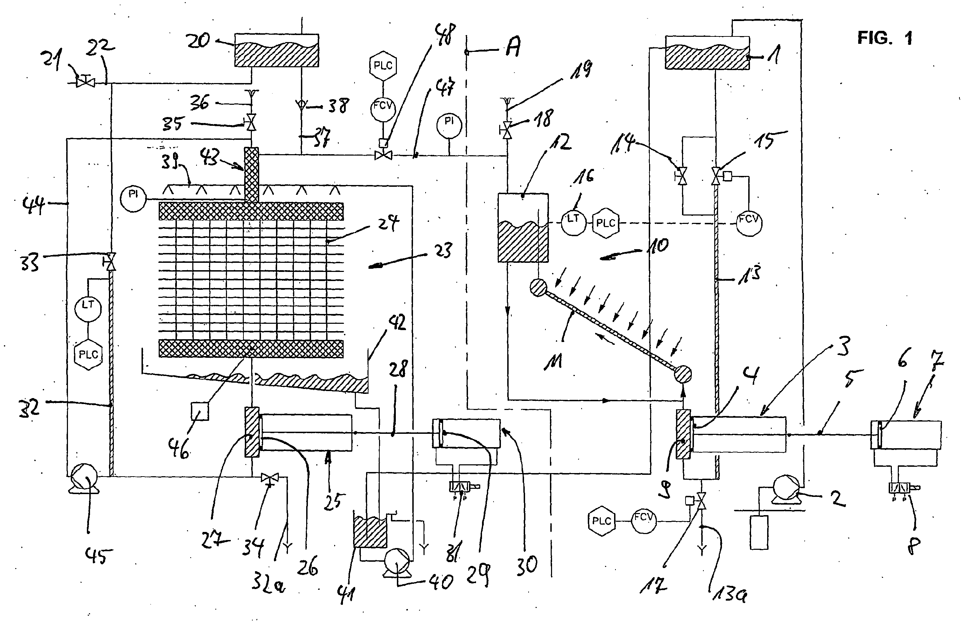

Anlagen hier vorliegender Art enthalten jeweils eine Verdampferseite und eine Kondensatorseite. In Figur 1 ist eine strichpunktierte Trennlinie A eingezeichnet, wobei sich rechts von dieser Trennlinie die Verdampferseite und links davon die Kondensatorseite befinden. Die Verdampferseite enthält einen als oben offene Wanne ausgebildeten Rohwasserbehälter 1, der durch eine Pumpe 2 mit Meerwasser versorgbar ist. Unter dem Rohwasserbehälter 1 befindet sich ein tiefer als dieser angeordnetes Zylinder-Kolbenaggregat 3, das einen in einem Zylinder angeordneten Kolben 4 aufweist, der über eine Kolbenstange 5 mit dem Kolben 6 eines gleichhubigen, hydraulisch- oder vorzugsweise pneumatisch betätigbaren Zylinder-Kolbenaggregats 7 verbunden ist, das an eine geeignete, nicht näher dargestellte Energiequelle, hier in Form einer Druckölquelle angeschlossen und mittels eines Steuerschiebers 8 steuerbar ist. Das Zylinder-Kolbenaggregat 3 besitzt einen vom Kolben 4 begrenzten Arbeitsraum 9, der durch eine Bewegung des Kolbens 4 innerhalb des zugeordneten Zylinders vergrößer- bzw. verkleinerbar ist.

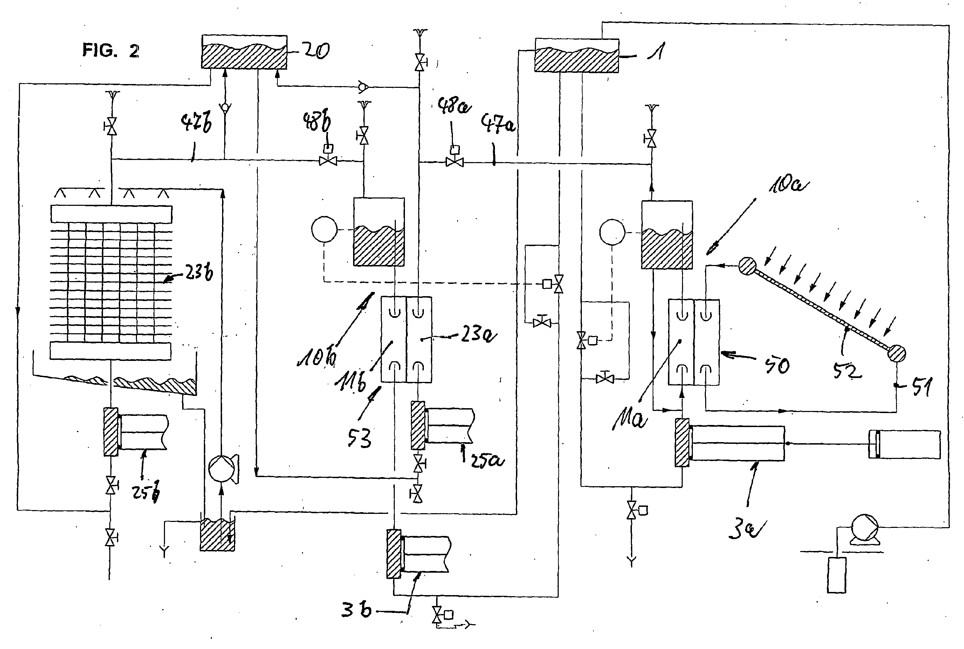

Niveaumäßig über dem Zylinder-Kolbenaggregat 3 befindet sich eine Verdampfungseinrichtung 10. Diese enthält einen Erhitzer 11 und einen diesem nachgeordneten Separator 12. Der Erhitzer 11 ist im dargestellten Beispiel als Sonnenkollektor ausgebildet, so dass sich praktisch eine direkte Beheizung durch Solarenergie ergibt. Es wäre aber auch denkbar, den Erhitzer in einen Wärmetauscher zu integrieren und über einen Sekundärheizkreis zu beheizen, wie beispielsweise in Figur 2 rechts angedeutet ist. Der Separator 12, in welchem eine Trennung von Wasser und Dampf herbeigeführt wird, befindet sich niveaumäßig oberhalb des Erhitzers 11, aber noch unterhalb des Rohwasserbehälters 1. Die Verdampfungseinrichtung 10 mit Erhitzer 11 und Separator 12 und der Arbeitsraum 9 des Zylinder-Kolbenaggregats bilden ein miteinander verbundenes, nach außen abschließbare Gefäßsystem. Hierzu sind der Arbeitsraum 9 mit der Unterseite des Erhitzers 11 und dessen Oberseite mit dem Separator 12 und dieser mit dem Arbeitsraum 9 leitungsmäßig verbunden. Die vom Separator 12 zum Arbeitsraum 9 führende Leitung geht vom Boden des Separators 12 ab. Die vom Erhitzer 11 zum Separator 12 führende Leitung mündet im oberen Bereich des Separators 12 aus.

Vom Rohwasserbehälter 1 führt eine durch eine Ventilanordnung absperrbare Ladeleitung 13 zur Unterseite des Arbeitsraums 9. Im dargestellten Beispiel enthält die der Ladeleitung 13 zugeordnete Ventilanordnung 2 parallele Zweige mit jeweils einem Ventil 14 bzw. 15, von denen eines, hier das Ventil 15, mittels eines dem Separator 12 zugeordneten Niveaureglers 16 steuerbar ist. Vom unteren Bereich der Ladeleitung 13 geht ein durch ein Ventil 17 absperrbarer Entleerungsstutzen 13a ab. Vom oberen Bereich des Separators 12 geht ein mittels eines Ventils 18 absperrbarer Entlüftungsstutzen 19 ab.

Die Kondensatorseite enthält einen auf gleichem Niveau wie der Rohwasserbehälter 1 angeordneten Reinwasserbehälter 20, der über einen mittels eines Ventils 21 absperrbaren, mit einer Reinwasserquelle verbundenen Zulauf 22 mit Reinwasser beaufschlagbar ist. Niveaumäßig unterhalb des Reinwasserbehälters 20 befindet sich eine Kondensationseinrichtung 23, die hier einen Röhrenkondensator 24 enthält. Unterhalb des Kondensators 24 befindet sich ein Zylinder-Kolbenaggregat 25, dessen Kolben 26 einen Arbeitsraum 27 begrenzt und über eine Kolbenstange 28 mit dem Kolben 29 eines gleichhubigen, vorzugsweise wie das Zylinder-Kolbenaggregat 7 betätigbaren Zylinder-Kolbenaggregats 30 verbunden ist, das mit derselben Druckmittelquelle wie das Zylinder-Kolbenaggregat 7 verbunden sein kann und durch einen Steuerschieber 31 steuerbar ist.

Vom Reinwasserbehälter 20 geht eine Ladeleitung 32 zum unteren Bereich des Arbeitsraums 27. Die Ladeleitung 32 ist mittels eines Ventils 33 absperrbar. Von der Ladeleitung 32 geht ein mittels eines Ventils 34 absperrbarer Entleerungsstutzen 32a ab. Vom Eingang des Kondensators 24 geht ein mittels eines Ventils 35 absperrbarer Entlüftungsstutzen 36 ab. Der Eingang des Kondensators 24 ist ferner über eine Entladeleitung 37, in der sich ein Rückschlagventil 38 befindet, mit dem Reinwasserbehälter 20 verbunden. Das Rückschlagventil 38 ist so ausgebildet, dass es in Richtung zum Reinwasserbehälter 20 hin öffnet.

Der Kondensator 24 und der Arbeitsraum 27 des Zylinder-Kolbenaggregats 25 bilden ein verbundenes Gefäßsystem, das nach außen abschließbar ist. Hierzu ist der Arbeitsraum 27 an die Unterseite des Kondensators 24 angeschlossen. Die durch eine Bewegung des Kolbens 26, hier nach rechts, erreichbare, maximale Volumenvergrößerung des Arbeitsraums 27 ist zweckmäßig größer als das Fassungsvermögen des Kondensators 24 auf der Kondensatseite.

Dem Kondensator 24 ist hier eine Kühleinrichtung zugeordnet. Diese enthält im dargestellten Ausführungsbeispiel eine den auf seiner Innenseite mit Dampf beaufschlagten Kondensator 24 auf seiner Außenseite beaufschlagende Sprüheinrichtung 39, die über eine zugeordnete Kühlwasserpumpe 40 mit Kühlwasser, vorzugsweise Rohwasser, beaufschlagbar ist. Der Kühlwasserpumpe 40 ist hierzu ein Kühlwasserbehälter 41 zugeordnet, der über eine vom Rohwasserbehälter 1 abgehende Versorgungsleitung mit Rohwasser versorgbar ist. Das vom Kondensator 24 ablaufende Kühlwasser wird durch eine den Kondensator 24 unterfassende Auffangwanne 42 aufgefangen, von der eine Rücklaufleitung zum Kühlwasserbehälter 41 führt.

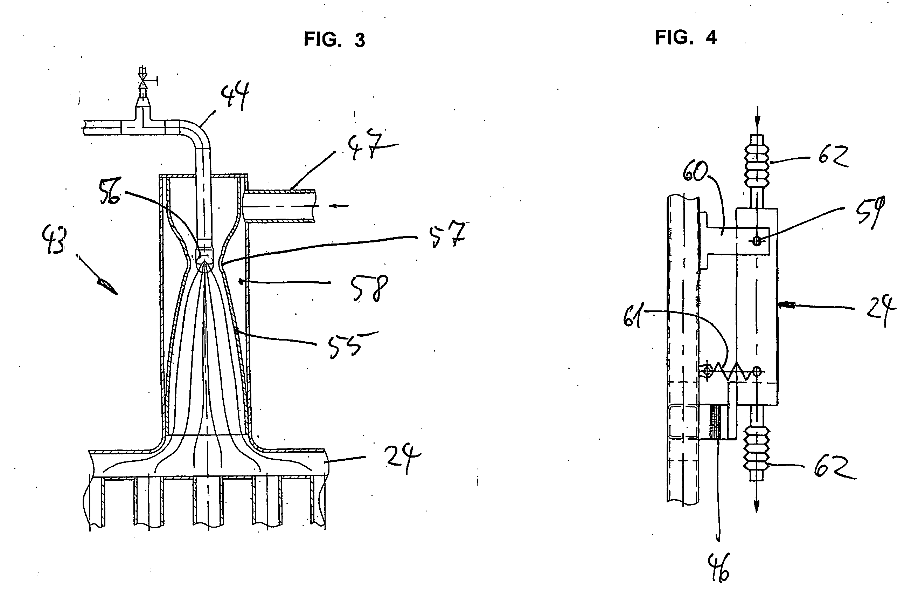

Dem Dampfeingang des Kondensators 24 ist eine Injektionseinrichtung 43 zugeordnet, die im Zusammenhang mit der Figur 3 noch näher beschrieben werden wird. Diese Injektionseinrichtung enthält ein Venturirohr, das mit Reinwasser beaufschlagt wird. Der Injektionseinrichtung 43 ist daher eine Versorgungsleitung 44 zugeordnet, die mit einer saugseitig am Arbeitsraum 27 liegenden Pumpe 45 versehen ist. Durch die Injektoreinrichtu.i'1g 43 wird innerhalb des Kondensators 24 eine Druckerhöhung erreicht, was den Kondensationseffekt verbessert.

Zur weiteren Verbesserung des Kondensationseffekts kann der Kondensator 24 als Schwingkondensator ausgebildet sein, der während des Kondensationsbetriebs mittels eines Schwingungsgenerators 46 zu Rüttelbewegungen angeregt wird, wie im Zusammenhang mit der Figur 4 noch näher beschrieben werden wird.

Die Verdampferseite und die Kondensatorseite sind durch eine vom Ausgang des Separators 12 abgehende und zum Eingang des Kondensators 24 führende Verbindungsleitung 47 miteinander verbunden. Diese ist mittels eines Ventils 48 absperrbar. Dieses ist zweckmäßig mittels einer Steuereinrichtung, vorzugsweise in Form einer sogenannten SPS, steuerbar. Dies gilt auch für die Ventile 15, 17 und 33. Die anderen Ventile können zweckmäßig als manuell betätigbare Ventile ausgebildet sein.

Zur Inbetriebnahme der Anlage wird zunächst der Rohwasserbehälter 1 mittels der zugeordneten Pumpe 2 mit Meerwasser gefüllt. An den Überlauf des Rohwasserbehälters 1 ist der Kühlwasserbehälter 41 angeschlossen. Alle Ventile sind geschlossen, nur das manuelle Entlüftungsventil 18 wird geöffnet. Der Kolben 4 des Zylinder-Kolbenaggregats 3 befindet sich in seiner dem kleinsten Volumen des Arbeitsraums 9 zugeordneten, hier linken Endstellung, wie in Figur 1 angedeutet. Durch Öffnen des manuellen Ventils 14 wird die Verdampferseite geflutet, bis das Rohwasser am Entlüftungsstutzen 19 austritt. Sobald dies der Fall ist; werden die Ventile 18 und 14 geschlossen.

Im Bereich der Kondensatorseite sind alle Automatikventile und manuellen Ventile zunächst geschlossen. Zunächst wird nun der Reinwasserbehälter 20 durch Öffnen des Ventils 21 zu etwa 1/3 mit von außen zugeführtem Reinwasser gefüllt. Anschließend wird das Ventil 21 wieder geschlossen. Anschließend wird das Entlüftungsventil 35 geöffnet. Der Kolben 26 des Zylinder-Kolbenaggregats 25 befindet sich in seiner dem kleinsten Volumen des Arbeitsraums 27 zugeordneten, hier linken Endstellung. Durch Öffnen des in der Ladeleitung 32 angeordneten Ventils 33 wird nun das gesamte Kondensatorsystem geflutet, bis Wasser am Entlüftungsstutzen 36 austritt. Sobald dies der Fall ist, werden die Ventile 35 und 33 geschlossen.

Durch Aktivierung der Zylinder-Kolbenaggregate 7 und 30 durch entsprechende Ansteuerung bzw. Betätigung der zugeordneten Steuerschieber 8 bzw. 31 werden die Kolben 4 und 26 der Zylinder-Kolbenaggregate 3 und 25 in die der in Figur 1 gezeichneten Endstellung gegenüberliegende Endstellung gefahren, wodurch die von den Kolben 4 bzw. 26 jeweils begrenzten Arbeitsräume 9 bzw. 27 bis auf ihr maximales Volumen vergrößert werden. Dabei sinkt auf der Verdampferseite der Flüssigkeitsstand im Separator 12 auf die gezeichnete Arbeitsposition ab. Die durch die Bewegung des Kolbens 4 erreichbare Volumenvergrößerung ist dementsprechend kleiner als das Gesamtfassungsvermögen des Separators 12. Auf der Kondensatorseite sinkt der Flüssigkeitsstand bis unterhalb der Mitte des zugeordneten Zylinder-Kolbenaggregats 25 ab. Die durch die Bewegung des Kolbens 26 des Zylinder-Kolbenaggregats 25 erzielbare Volumenvergrößerung ist dementsprechend größer als das innere, das heißt das kondensatseitige Fassungsvermögen des Kondensators 24. Im genannten Fall entspricht die genannte Volumenvergrößerung mehr als dem Doppelten des Fassungsvermögens des Kondensators 24.

Die den Arbeitsraum 9 und die Verdampfungseinrichtung 10 bzw. den Arbeitsraum 27 und den Kondensator 24 enthaltenden Gefäßsysteme sind nach außen hermetisch abgeschlossen. Durch die Volumenvergrößerung der Arbeitsräume 9 bzw. 27 ergibt sich in diesen nach außen hermetisch abgeschlossenen Gefäßsystemen ein nahezu vollständiges Vakuum bzw. jedenfalls ein sehr hoher Unterdruck. Dies führt dazu, dass das Wasser im gesamten System bereits bei vergleichsweise niedrigen Temperaturen siedet.

Die dem Verdampfer 11 zugeführte Heizenergie, hier die direkt zugeführte Sonnenergie, hält diesen Siedevorgang aufrecht. Auf der Kondensatorseite wird durch Zuschalten der Pumpe 40 die Kühleinrichtung in Betrieb genommen. Gleichzeitig wird durch Einschalten der Pumpe 45 die Injektionseinrichtung 43 in Betrieb genommen. Durch Öffnen des in der Verbindungsleitung 47 vorgesehenen Ventils 48 strömt nun Dampf aus dem Separator 12 in den Kondensator 24. Die Injektionseinrichtung 43 bewirkt dabei eine Druckerhöhung, welche eine Kondensation bei höherer Temperatur ermöglicht und damit auch die Temperaturdifferenz zwischen der Kondensationstemperatur und der Temperatur an der Außenseite des Kondensators erhöht. Die im dargestellten Ausführungsbeispiel als mit Rohwasser beaufschlagbare Sprüheinrichtung 39 ausgebildete Kühleinrichtung erreicht daher eine sehr hohen Wirkungsgrad, was die Kondensationsleistung noch vergrößert.

Das an der Außenseite des Kondensators 24 verdunstende Wasser wird kontinuierlich aus dem Überlauf vom Rohwasserbehalter 1 zum Kühlwasserbehälter 41 nachgefüllt. Zur weiteren Leistungssteigerung könnte dem Kondensator 24 auch ein Gebläse zugeordnet sein, wodurch sich eine Kühlturmwirkung erreichen ließe.

Um eine Aufkonzentration von Salz im Kühlwasserbehälter 41 zu vermeiden, wird der vom Rohwasserbehälter 1 kommende Überlauf direkt in den Bereich der Saugseite der Pumpe 40 geführt. Dadurch wird dieselbe Menge an geringfügig aufkonzentriertem Salzwasser im Rücklauf des Kühlkreises in den vom Kühlwasserbehälter 41 abgehenden Überlauf fließen, wie Wasser vom Rohwasserbehälter 1 nachströmt.

Zur weiteren Leistungssteigerung des Kondensators 24 kann der Schwingungsgenerator 46 im Betrieb genommen werden. Dieser ist so ausgebildet, dass er den zugeordneten Kondensator 24 zu Schwingungen im Frequenzbereich von 5-20 000 Hz erregen kann. Hierdurch lässt sich die Effektivität des Kondensators 24 stark erhöhen.

Das Niveau des siedenden Wassers im Separator 12 wird durch automatisches Nachfüllen aus dem Rohwasserbehälter 1 konstant gehalten. Hierzu dient der dem Separator 12 zugeordnete Niveauregler 16, durch den das in der Ladeleitung 13 angeordnete Ventil 15 betätigbar ist.

Durch die fortwährende Kondensation im Kondensator 24 steigt der Flüssigkeitsstand auf der Kondensatorseite laufend an. Wenn dieses Niveau die Unterseite des Kondensators 24 erreicht hat, bewirkt ein von einem geeigneten Niveauwächter abgegebenes Signal, dass das in der Verbindungsleitung 47 angeordnete Ventil 48 geschlossen und der Steuerschieber 31 umgeschaltet wird, wodurch der Kolben 26 des Zylinder-Kolbenaggregats 25 in Richtung Verkleinerung des Arbeitsraums 27 bewegt wird. Hierdurch wird das angesammelte, kondensierte und damit entsalzte Wasser über die mit dem Rückschlagventil 38 versehene Entladeleitung 37 in den Reinwasserbehälter 20 gedrückt. Nach Erreichen des kleinsten Volumens des Arbeitsraums 27 schaltet der Steuerschieber 31 automatisch um, wodurch der Kolben 26 wieder in die andere Richtung bewegt und so erneut ein hohes Vakuum erzeugt werden. Anschließend kann das Ventil 48 in der Verbindungsleitung 47 wieder geöffnet werden, wodurch ein neuer Zyklus beginnen kann. Auch auf der Verdampferseite kann das Vakuum aufgefrischt werden, indem das Zylinder-Kolbenaggregat 3 bei abgeschlossenem, zugeordnetem Gefäßsystem, wie eingangs geschildert, betätigt wird.

Die Anordnung gemäß Figur 2 unterscheidet sich von der Anordnung gemäß Figur 1 lediglich dadurch, dass zwei Verdampfungsereinrichtungen 10a, 10b und zwei Kondensationseinrichtungen 23a, 23b vorgesehen sind. Die Verdampfungseinrichtung 10a ist durch eine Verbindungsleitung 47a mit Ventil 48a mit der Kondensationseinrichtung 23a verbunden. Die Verdampfungseinrichtung 10b ist über eine Verbindungsleitung 47b mit Ventil 48b mit der Kondensationseinrichtung 23b verbunden. Jeder Verdampfungseinrichtung und jeder Kondensationseinrichtung ist jeweils ein Zylinder-Kolbenaggregat 3a, 3b bzw. 25a, 25b zugeordnet. Eine Besonderheit gegenüber Figur 1 besteht darin, dass der Erhitzer 11a der Verdampfungseinrichtung 10a hier nicht direkt beheizt wird, sondern wie weiter oben schon erwähnt wurde, indirekt. Hierzu ist ein Wärmetauscher 50 vorgesehen, dessen eine Seite den Erhitzer 11a der Verdampfungseinrichtung 10a bildet und dessen andere Seite in einem Sekundärheizkreis 51 liegt, der über einen Sonnenkollektor 52 führt. Der Erhitzer 11b der Verdampfungseinrichtung 10b und der Kondensator der Kondensationseinrichtung 23a bilden ebenfalls einen Wärmetauscher 53, der bewirkt, dass die Kondensationswärme der Kondensationseinrichtung 23 gleichzeitig zur Erhitzung des den Erhitzer 11b durchströmenden Rohwassers Verwendung findet. Zweckmäßig können die Wärmetauscher 50 bzw. 53 als Plattenwärmetauscher ausgebildet sein.

Dem Dampfeingang der Kondensationseinrichtungen kann jeweils, wie weiter oben schon erwähnt wurde, eine Injektionseinrichtung 43 zugeordnet sein. Ein Beispiel ist in Figur 3 dargestellt. Die hier dargestellte Injektionseinrichtung 43 enthält ein Venturirohr 55, das mit einer Einschnürung versehen ist und dessen Innenraum mit einem Reinwasser-Strahl beaufschlagt wird. Hierzu ist die der Injektionseinrichtung 43 zugeordnete Versorgungsleitung 44 im Bereich der genannten Einschnürung mit einer Strahldüse 56 versehen. Das Venturirohr 55 ist im Bereich der Einschnürung mit radialen Ausnehmungen 57 versehen, die eine Verbindung zu einem umgebenden Ringraum 58 bilden, der mit der Verbindungsleitung 47 kommuniziert. Durch den von der Düse 56 erzeugten Reinwasser-Strahl wird ein Unterdruck erzeugt, durch den Dampf aus dem Ringraum 58 über die radialen Ausnehmungen 57 nach innen gezogen und in den zugeordneten Kondensator 24 hineingedrückt wird, bei dem es sich im dargestellten Beispiel um einen Röhrenkondensator handelt, der innen mit Dampf beaufschlagt wird und außen durch Luft oder zusätzliches Kühlmittel gekühlt werden kann.

Eine besonders gute Kondensatorleistung lässt sich, wie oben ebenfalls schon erwähnt wurde, dadurch erreichen, dass der Kondensator während des Kondensationsbetriebs mittels des Schwingungsgenerators 46 zu Rüttelbewegungen angeregt wird. Auf diese Weise wird verhindert, dass sich auf der Innenseite der Kondensatorröhren etc. Wassertropfen bilden können, welche die Kondensation beeinträchtigen würden.

Die Figur 4 zeigt einen Kondensator 24, der zu Rüttelbewegungen angeregt werden kann. Hierzu ist der Kondensator 24 einerseits pendelnd gelagert und andererseits mit dem Schwingungsgenerator 46 verbunden. Im dargestellten Beispiel ist der Kondensator 24 im Bereich seines oberen Endes um eine horizontale Achse 59 pendelnd an einem gestellfesten Lagerbock 60 aufgehängt und im Bereich seines unteren Endes mit dem gestellfest angeordneten Schwingungsgenerator 46 verbunden, dem eine Rückstellfeder 61 zugeordnet ist. Der Kondensator 24 ist ein- und ausgangsseitig mit flexiblen Leitungsanschlüssen 62 versehen und hierüber mit fest installierten Leitungen verbindbar.

Die Frequenz der mit dem Schwingungsgenerator 46 erzeugbaren Schwingungen kann im Bereich zwischen 5-20 000 Hz liegen. Die optimale Frequenz muss im Einzelfall durch Versuche ermittelt werden. Bei günstiger Frequenzwahl lässt sich eine Steigerung der Effektivität des Kondensators um bis zu 60% erreichen. Der Grund ist darin zu sehen, dass in Folge der Rüttelbewegungen das auf der Innenseite der Kondensatorröhren sich niederschlagende Wasser vor einer größeren Tropfenbildung abläuft, wodurch eine vom Wasser bewirkte Isolation verhindert und damit der Wärmedurchgang durch die Kondensatorröhren verbessert wird.

## Patentansprüche

1. Verfahren zur Erzeugung einer Reinflüssigkeit aus einer Rohflüssigkeit, insbesondere zur Erzeugung von Süßwasser aus Salzwasser, durch in einer Verdampfungseinrichtung (10) unter Unterdruck stattfindende Verdampfung der Rohflüssigkeit und Kondensation des Dampfes in einer mit dem Dampfausgang der Verdampfungseinrichtung (10) verbundenen Kondensationseinrichtung (23), **dadurch gekennzeichnet, dass** die Verdampfungseinrichtung (10) und die Kondensationseinrichtung (23) in voneinander getrenntem Zustand mit Rohflüssigkeit bzw. Reinflüssigkeit gefüllt und anschließend jeweils durch Volumenvergrößerung unter hermetischem Abschluss mit Unterdruck beaufschlagt werden und dass die Verdampfungseinrichtung (10) und die Kondensationseinrichtung (23) erst in unter Unterdruck stehendem Zustand strömungsmäßig miteinander verbunden werden.

2. Verfahren nach Anspruch 1, **dadurch gekennzeichnet, dass** die Rohflüssigkeit in einem Erhitzer (11) erwärmt wird und dass der Dampf in einem dem Erhitzer (11) zugeordneten Separator (12) von Wasser getrennt wird.

3. Verfahren nach einem der vorhergehenden Ansprüche, **dadurch gekennzeichnet, dass** die Kondensationseinrichtung (23) während des Kondensationsbetriebs gekühlt wird.

4. Verfahren nach einem der vorhergehenden Ansprüche, **dadurch gekennzeichnet, dass** der Dampf in die Kondensationseinrichtung (23) unter Verwendung von aus der Kondensationseinrichtung (23) entnommener Reinflüssigkeit injiziert wird.

5. Verfahren nach einem der vorhergehenden Ansprüche, **dadurch gekennzeichnet, dass** die Kondensationseinrichtung (23) während des Kondensationsbetriebs zu Rüttelbewegungen angeregt wird.

6. Verfahren nach einem der vorhergehenden Ansprüche, **dadurch gekennzeichnet, dass** die Verdampfungseinrichtung (10) aus einem höher gelegenen Rohwassertank (1) befüllt und bei Bedarf nachgeladen wird.

7. Verfahren nach einem der vorhergehenden Ansprüche, **dadurch gekennzeichnet, dass** die Kondensationseinrichtung (23) aus einem höher gelegenen Reinwassertank (20) befüllt wird, in den das kondensierte Wasser durch Volumenverkleinerung verdrängt wird.

8. Vorrichtung zur Erzeugung einer Reinflüssigkeit aus einer Rohflüssigkeit, insbesondere zur Erzeugung von Süßwasser aus Salzwasser, mit wenigstens einer Verdampfungseinrichtung (10), die mit Rohflüssigkeit versorgbar ist und in der ein Unterdruck erzeugbar ist, und mit wenigstens einer Kondensationseinrichtung (23), die über eine Verbindungsleitung (47) mit Dampf aus wenigstens einer vorgeordneten Verdampfungseinrichtung (10) beaufschlagbar ist, **dadurch gekennzeichnet, dass** jede Verdampfungseinrichtung (10) mit einem an ihren unteren Bereich angeschlossenen, einen in der Größe veränderbaren Arbeitsraum (9) aufweisenden Pumpenaggregat (3) ein Gefäßsystem bildet, das bei verkleinertem Arbeitsraum (9) mit Rohflüssigkeit befüllbar und durch Vergrößern des Arbeitsraums (9) in hermetisch abgeschlossenem Zustand mit einem Unterdruck beaufschlagbar ist,
dass die dem Kondensat zugeordnete Seite der Kondensationseinrichtung (23) mit einem an ihren unteren Bereich angeschlossenen, einen in der Größe veränderbaren Arbeitsraum (27) aufweisenden Pumpenaggregat (25) ein Gefäßsystem bildet, das bei verkleinertem Arbeitsraum (27) mit Reinflüssigkeit befüllbar und durch Vergrößern des Arbeitsraums (27) in hermetisch abgeschlossenem Zustand mit einem Unterdruck beaufschlagbar ist und
dass in der Verbindungsleitung (47) eine Absperreinrichtung (48) vorgesehen ist, welche die Verbindungsleitung (47) nur bei maximal vergrößerten Arbeitsräumen (9 bzw. 27) freigibt.

9. Vorrichtung nach Anspruch 8, **dadurch gekennzeichnet, dass** die Verdampfungseinrichtung (10) wenigstens einen Erhitzer (11) und einen diesem nachgeordneten Separator (12) enthält.

10. Vorrichtung nach Anspruch 8 oder 9, **dadurch gekennzeichnet, dass** dem eine Verdampfungseinrichtung (10) enthaltenden Gefäßsystem ein höher gelegener Rohwassertank (1) zugeordnet ist, der über eine absperrbare Ladeleitung (13) mit dem unteren Bereich des zugeordneten Gefäßsystems verbunden ist, das eine von seinem oberen Bereich abgehende, absperrbare Entlüftungseinrichtung (19) aufweist.

11. Vorrichtung nach einem der Ansprüche 8 - 10, **dadurch gekennzeichnet, dass** dem die Kondensatorseite einer Kondensationseinrichtung (23) enthaltenden Gefäßsystem ein höher gelegener Reinwassertank (20) zugeordnet ist, der über eine absperrbare Ladeleitung (32) mit dem unteren Bereich des zugeordneten Gefäßsystems und durch eine mit einem in Richtung Reinwassertank (20) öffnenden Rückschlagventil (38) versehene Entladeleitung (37) mit dem oberen Bereich des zugeordneten Gefäßsystems verbunden ist, das eine von seinem oberen Bereich abgehende, absperrbare Entlüftungseinrichtung (36) aufweist.

12. Verfahren nach einem der vorhergehenden Ansprüche 8-11, **dadurch gekennzeichnet, dass** das mögliche Vergrößerungsvolumen des Arbeitsraums (27) des zum kondensatorseitigen Gefäßsystems gehörenden Pumpenaggregats (25) größer als das Fassungsvermögen der zugeordneten Kondensationseinrichtung (23), vorzugsweise mehr als doppelt so groß, ist.

13. Vorrichtung nach einem der vorhergehenden Ansprüche 8 - 12, **dadurch gekennzeichnet, dass** das Vergrößerungsvolumen des Arbeitsraums (9) des zum verdampferseitigen Gefäßsystem gehörenden Pumpenaggregats (3) höchstens dem Fassungsvermögen des Separators (12) der zugeordneten Verdampfungseinrichtung, vorzugsweise kleiner als dieses, ist.

14. Vorrichtung nach einem der vorhergehenden Ansprüche 8 - 13, **dadurch gekennzeichnet, dass** die Pumpenaggregate (3 bzw. 25) jeweils einen in einem Zylinder angeordneten Verschiebekolben (4 bzw. 26) aufweise, der mit dem mit einem vorzugsweise hydraulischen Druckmittel beaufschlagbaren, in einem Zylinder angeordneten Kolben (6 bzw. 29) eines gleichhubigen Antriebsaggregats (7 bzw. 30) verbunden ist.

15. Vorrichtung nach einem der vorhergehenden Ansprüche 8 - 14, **dadurch gekennzeichnet, dass** der Erhitzer (11) der Verdampfungseinrichtung (10) direkt oder indirekt beheizbar ist.

16. Vorrichtung nach einem der vorhergehenden Ansprüche 8 - 15, **dadurch gekennzeichnet, dass** der Erhitzer (11) als Sonnenkollektor ausgebildet ist oder dass dem Erhitzer (11) ein Sonnenkollektor (52) zugeordnet ist.

17. Vorrichtung nach einem der vorhergehenden Ansprüche 8 - 15, **dadurch gekennzeichnet, dass** der Erhitzer (11b) in einen Wärmetauscher (53) integriert ist, dessen andere Seite als Kondensationseinrichtung (23a) einer anderen Verdampfungseinrichtung (10a) ausgebildet ist.

18. Vorrichtung nach Anspruch 17, **dadurch gekennzeichnet, dass** der Wärmetauscher (53) als Plattenwärmetauscher ausgebildet ist.

19. Vorrichtung nach einem der vorhergehenden Ansprüche 8 - 16, **dadurch gekennzeichnet, dass** der Kondensationseinrichtung (23) eine an einen mit Rohflüssigkeit beaufschlagbaren Kühlwasserkreislauf angeschlossene Kühleinrichtung, vorzugsweise in Form einer Sprüheinrichtung (39) zugeordnet ist.

20. Vorrichtung nach einem der vorhergehenden Ansprüche 8 - 19, **dadurch gekennzeichnet, dass** dem Dampfeingang der Kondensationseinrichtung (23) eine Injektoreinrichtung (43) zugeordnet ist, die ein Venturirohr (55) aufweist, dessen mit einem Reinflüssigkeitsstrahl beaufschlagbarer Innenraum über im Bereich einer Einschnürung vorgesehene Eingänge (57) mit einem mit Dampf beaufschlagbaren Ringraum (58) verbunden ist.

21. Vorrichtung nach einem der vorhergehenden Ansprüche 8 - 20, **dadurch gekennzeichnet, dass** die Kondensationseinrichtung (23) pendelnd gelagert und mit einem Schwingungsgenerator (46) verbunden ist.

22. Vorrichtung nach Anspruch 21, **dadurch gekennzeichnet, dass** die mit einem Schwingungsgenerator (46) verbundene Kondensationseinrichtung (23) ein- und ausgangsseitig mit flexiblen Leitungsanschlüssen (62) versehen ist.

## Claims

1. A process for producing a clean liquid from an untreated or crude liquid, in particular for producing fresh water from salt water by means of evaporation of the crude liquid occurring under partial vacuum in an evaporation device (10) and condensation of the vapour in a condensation device (23) connected with the vapour outlet of the evaporation device (10), **characterised in that** the evaporation device (10) and the condensation device (23), in disconnected condition, are filled with crude or clean liquid, respectively, and are subsequently exposed to a partial vacuum created by volume enlargement under hermetically sealed conditions and that the evaporation device (10) and the condensation device (23) are not flow-connected with each other until they are under partial vacuum.

2. A process according to Claim 1, **characterised in that** the crude liquid is heated in a heater (11) and that the vapour is separated in a separator (12) associated with the heater (11).

3. A process according to any of the preceding Claims, **characterised in that** the condensation device (23) is cooled during condensation.

4. A process according to any of the preceding Claims, **characterised in that** the vapour is injected into the condensation device (23) using clean liquid from the condensation device (23).

5. A process according to any of the preceding Claims, **characterised in that** the condensation device (23) is stimulated to perform vibrating movements.

6. A process according to any of the preceding Claims, **characterised in that** the evaporation device (10) is filled from a raw water tank (1) located at a higher level and refilled as and when required.

7. A process according to any of the preceding Claims, **characterised in that** the condensation device (23) is filled from a higher-level clean water tank (20) into which the condensed water is urged due to volume reduction.

8. A device for producing clean liquid from crude liquid, in particular for producing fresh water from salt water, comprising at least one evaporation device (10) which can be supplied with crude liquid and in which a partial vacuum can be produced, and further comprising at least one condensation device (23) which can be supplied with vapour from at least one upstream evaporation device (10) via a connecting line (47), **characterised in that** each evaporation device (10) forms a vessel system comprising a pump unit (3) connected with the bottom area of the evaporation device and having an operating chamber (9) of variable size, which vessel system can be filled with crude liquid when the operating chamber (9) is reduced in size and be exposed to a partial vacuum in hermetically closed condition by enlarging the operating chamber (9), and further **in that** the side of the condensation device (23) associated with the condensate forms a vessel system comprising a pump unit (25) connected with the bottom area of the evaporation device and having an operating chamber (27) of variable size, which vessel system can be filled with clean liquid when the operating chamber (27) is reduced in size and be exposed to a partial vacuum in hermetically closed condition by enlarging the operating chamber (27), and further **in that** provision is made in the connecting line (47) for a shut-off device (48) releasing the connecting line (47) only when the operating chambers (9 or 27) are enlarged to maximum size.

9. A device according to Claim 8, **characterised in that** the evaporation device (10) comprises at least one heater (11) and one separator (12) provided downstream of the heater.

10. A device according to Claim 8 or 9, **characterised in that** the vessel system comprising an evaporation device (10) is associated with a raw water tank (1), arranged at a higher level, which is connected with the bottom area of the associated vessel system via a supply line (13), which can be shut off, which vessel system comprises a venting device (19) that extends from the top area of the vessel system and can be shut off.

11. A device according to any of the Claims 8 to 10, **characterised in that** the vessel system comprising the condenser side of a condensation device (23) is associated with a clean water tank (20) located at a higher level, which is connected via a supply line (32), which can be shut off, with the bottom area of the associated vessel system, and with the upper area of the associated vessel system via a discharge line (37) provided with a check valve (38) opening towards the clean water tank (20), with the vessel system comprising a venting device (36), which can be shut off, extending from the upper area of the vessel system.

12. A process according to any of the preceding Claims 8 to 11, **characterised in that** the possible enlargement volume of the operating chamber (27) of the pump unit (25) appertaining to the vessel system on the side of the condenser is larger than the capacity of the associated condensation device (23), preferably more than twice as large.

13. A device according to any of the preceding Claims 8 to 12, **characterised in that** the enlargement volume of the operating chamber (9) of the pump unit (3) appertaining to the vessel system on the side of the evaporator maximally corresponds to the capacity of the separator (12) of the associated evaporator device, and is preferably smaller than that.

14. A device according to any of the preceding Claims 8 to 13, **characterised in that** each of the pump units (3 and 25) comprises a sliding piston (4 and 26) arranged in a cylinder, which sliding piston is connected with a piston (6 and 29) of an equal-stroke drive unit (7 and 30), which latter piston is likewise provided in a cylinder and suppliable with a preferably hydraulic pressure medium.

15. A device according to any of the preceding Claims 8 to 14, **characterised in that** the heater (11) of the evaporation device (10) can be heated directly or indirectly.

16. A device according to any of the preceding Claims 8 to 15, **characterised in that** the heater (11) is designed as a solar collector or **in that** the heater (11) is associated with a solar collector (52).

17. A device according to any of the preceding Claims 8 to 15, **characterised in that** the heater (11 b) is integrated in a heat exchanger (53), the other side of which is designed as a condensation device (23a) of another evaporation device (10a).

18. A device according to Claim 7, **characterised in that** the heat exchanger (53) is designed as a plate heat exchanger.

19. A device according to any of the preceding Claims 8 to 16, **characterised in that** the condensation device (23) is associated with a cooling device, preferably in the form of a sprayer device (39), which cooling device is connected with a cooling water circuit that can be supplied with crude liquid.

20. A device according to any of the preceding Claims 8 to 19, **characterised in that** an injector device (43) is associated with the vapour inlet of the condensation device (23), which injector device comprises a venturi tube (55) whose inner space, which can be supplied with a clean liquid jet, is connected via inlets (57) provided in the area of a constriction with an annular space (58) which can be supplied with vapour.

21. A device according to any of the preceding Claims 8 to 20, **characterised in that** the condensation device (23) is mounted in an oscillating bearing and connected with a vibration generator (46).

22. A device according to Claim 21, **characterised in that** the condensation device (23) connected with an oscillation generator (46) is on its inlet and outlet lines provided with flexible fittings (62).

## Revendications

1. Procédé pour produire un liquide pur à partir d'un liquide brut, en particulier pour produire de l'eau douce à partir d'eau salée, par l'intermédiaire d'une évaporation du liquide brut ayant lieu sous dépression dans un dispositif d'évaporation (10) ainsi que d'une condensation de la vapeur dans un dispositif de condensation (23) relié à la sortie de vapeur du dispositif d'évaporation (10), **caractérisé par le fait que** ledit dispositif d'évaporation (10) et ledit dispositif de condensation (23) sont remplis de liquide brut ou bien de liquide pur lorsqu'ils sont séparés l'un de l'autre et sont ensuite, par une augmentation de volume, à fermeture hermétique, respectivement mis en dépression, et que le dispositif d'évaporation (10) et le dispositif de condensation (23) ne sont reliés fluidiquement entre eux que lorsqu'ils sont mis en dépression.

2. Procédé selon la revendication 1, **caractérisé par le fait que** le liquide brut est chauffé dans un réchauffeur (11) et que la vapeur est séparée de l'eau dans un séparateur (12) associé au réchauffeur (11).

3. Procédé selon l'une des revendications précédentes, **caractérisé par le fait que** ledit dispositif de condensation (23) est refroidi durant le fonctionnement à condensation.

4. Procédé selon l'une des revendications précédentes, **caractérisé par le fait que** la vapeur est injectée dans le dispositif de condensation (23) en utilisant du liquide pur pris dans le dispositif de condensation (23).

5. Procédé selon l'une des revendications précédentes, **caractérisé par le fait que** ledit dispositif de condensation (23) est incité, pendant le fonctionnement à condensation, à effectuer des mouvements vibratoires.

6. Procédé selon l'une des revendications précédentes, **caractérisé par le fait que** ledit dispositif d'évaporation (10) est rempli à partir d'un réservoir d'eau brute (1) situé à un niveau supérieur et est rechargé en cas de besoin.

7. Procédé selon l'une des revendications précédentes, **caractérisé par le fait que** le dispositif de condensation (23) est rempli à partir d'un réservoir d'eau pure (20) situé à un niveau supérieur dans lequel l'eau condensée est déplacée par une réduction du volume.

8. Dispositif pour produire un liquide pur à partir d'un liquide brut, en particulier pour produire de l'eau douce à partir d'eau salée, comprenant au moins un dispositif d 'évaporation (10) qui peut être alimenté en liquide brut et dans lequel peut être générée une dépression, ainsi qu'au moins un dispositif de condensation (23) qui peut être alimenté, via une conduite de connexion (47), en vapeur à partir d'au moins un dispositif d'évaporation (10) placé en amont, **caractérisé par le fait que** chaque dispositif d'évaporation (10) forme conjointement avec un groupe de pompe (3) raccordé à sa zone inférieure et présentant un espace de travail à taille modifiable (9) un système-réservoir qui, lorsque ledit espace de travail (9) est réduit, peut être rempli de liquide brut et qui, en agrandissant ledit espace de travail (9), en état hermétiquement fermé, peut être mis en dépression,
que le côté du dispositif de condensation (23), qui est associé au condensat forme conjointement avec un groupe de pompe (25) raccordé à la zone inférieure du dispositif de condensation et présentant un espace de travail à taille modifiable (27) un système-réservoir qui, lorsque ledit espace de travail (27) est réduit, peut être rempli de liquide pur et qui, en agrandissant ledit espace de travail (27), en état hermétiquement fermé, peut être mis en dépression, et
que dans ladite conduite de connexion (47) est prévu un dispositif de fermeture (48) qui ne libère ladite conduite de connexion (47) que lorsque lesdits espaces de travail (9 ou bien 27) sont agrandis au maximum.

9. Dispositif selon la revendication 8, **caractérisé par le fait que** ledit dispositif d 'évaporation (10) comprend au moins un réchauffeur (11) ainsi qu'un séparateur (12) placé en aval de celui-ci.

10. Dispositif selon la revendication 8 ou 9, **caractérisé par le fait qu'**au système-réservoir comprenant un dispositif d'évaporation (10) est associé un réservoir d'eau brute (1) situé à un niveau supérieur qui est relié, via une conduite de charge (13) apte à être fermée, à la zone inférieure du système-réservoir associé lequel présente un dispositif de purge (19) partant de sa zone supérieure et apte à être fermé.

11. Dispositif selon l'une des revendications 8 à 10, **caractérisé par le fait qu'**au système-réservoir comprenant le côté de condenseur d'un dispositif de condensation (23) est associé un réservoir d'eau pure (20) situé à un niveau supérieur qui est relié, via une conduite de charge (32) apte à être fermée, à la zone inférieure du système-réservoir associé et, via une conduite de décharge (37) pourvue d'un clapet anti-retour (38) ouvrant dans la direction du réservoir d'eau pure (20), à la zone supérieure du système-réservoir associé lequel présente un dispositif de purge (36) partant de sa zone supérieure et apte à être fermé.

12. Dispositif selon l'une des revendications précédentes 8 à 11, **caractérisé par le fait que** le volume d'agrandissement possible de l'espace de travail (27) du groupe de pompe (25) faisant partie du système-réservoir du condenseur est plus grand, de préférence plus de deux fois plus grand que la capacité du dispositif de condensation associé (23).

13. Dispositif selon l'une des revendications précédentes 8 à 12, **caractérisé par le fait que** le volume d'agrandissement de l'espace de travail (9) du groupe de pompe (3) faisant partie du système-réservoir de l'évaporateur est tout au plus égal à la capacité du séparateur (12) du dispositif d'évaporation associé, de préférence plus petit que celle-ci.

14. Dispositif selon l'une des revendications précédentes 8 à 13, **caractérisé par le fait que** les groupes de pompe (3 ou bien 25) présentent chacun un piston de déplacement (4 ou bien 26) qui est disposé dans un cylindre et qui est relié à un piston (6 ou bien 29) d'un équipement moteur à course égale (7 ou bien 30), lequel peut être alimenté en un fluide sous pression de préférence hydraulique et est disposé dans un cylindre.

15. Dispositif selon l'une des revendications précédentes 8 à 14, **caractérisé par le fait que** ledit réchauffeur (11) du dispositif d'évaporation (10) peut être chauffé directement ou indirectement.

16. Dispositif selon l'une des revendications précédentes 8 à 15, **caractérisé par le fait que** ledit réchauffeur (11) est réalisé comme collecteur solaire ou qu'au réchauffeur (11) est associé un collecteur solaire (52).

17. Dispositif selon l'une des revendications précédentes 8 à 15, **caractérisé par le fait que** le réchauffeur (11b) est intégré à un échangeur de chaleur (53) dont l'autre côté est réalisé en tant que dispositif de condensation (23a) d'un autre dispositif d 'évaporation (10a).

18. Dispositif selon la revendication 17, **caractérisé par le fait que** ledit échangeur de chaleur (53) est réalisé comme échangeur de chaleur à plaques.

19. Dispositif selon l'une des revendications précédentes 8 à 16, **caractérisé par le fait qu'**au dispositif de condensation (23) est associé un dispositif de refroidissement, de préférence sous forme d'un dispositif de pulvérisation (39), qui est raccordé à un circuit d'eau de refroidissement lequel peut être alimenté en liquide brut.

20. Dispositif selon l'une des revendications précédentes 8 à 19, **caractérisé par le fait qu'**à l'entrée de vapeur du dispositif de condensation (23) est associé un dispositif injecteur (43) qui présente un venturi (55) dont l'intérieur qui peut être alimenté en un jet de liquide pur est relié, via des entrées (57) prévues au niveau d'un étranglement, à un espace annulaire (58) apte à être alimenté en vapeur.

21. Dispositif selon l'une des revendications précédentes 8 à 20, **caractérisé par le fait que** ledit dispositif de condensation (23) est logé de façon pendulaire et est relié à un générateur de vibrations (46).

22. Dispositif selon la revendication 21, **caractérisé par le fait que** le dispositif de condensation (23) relié à un générateur de vibrations (46) est pourvu du côté de l' entrée et du côté de la sortie de raccords flexibles de conduite (62).
